# EUROPÄISCHE PATENTSCHRIFT

(11) **EP 2 695 867 B1**
(45) Veröffentlichungstag und Bekanntmachung des Hinweises auf die Patenterteilung: **19.07.2017**
(21) Anmeldenummer: 12768279.7
(22) Anmeldetag: 02.04.2012
(51) Int. Cl.: C04B 28/34, C04B 111/28, C04B 35/66, C04B 35/101, C04B 35/103, C04B 35/565, C04B 35/63

(54) **WÄRMEISOLIERENDER UND WÄRMELEITENDER BETON AUF EINEM ALUMINOPHOSPHAT-BINDEMITTEL (VARIANTEN)**
THERMALLY-INSULATING AND THERMALLY-CONDUCTING CONCRETES ON AN ALUMINOPHOSPHATE BINDER (VARIANTS)
BÉTONS CONDUISANT ET ISOLANT LA CHALEUR UTILISANT UN LIANT À BASE DE PHOSPHATE D'ALUMINIUM (ET VARIANTES)

(30) Priorität: 05.04.2011 RU 2011113092
(43) Veröffentlichungstag der Anmeldung: 12.02.2014
(73) Patentinhaber: Aktsionernoye obschestvo "TERM", 630090 Novosibirskaya oblast (RU)
(72) Erfinder: ALFERYEV, Sergey Dmitrievich, Tomskaya obl. 636035 (RU); POLYAKOV, Valeriy Anatolievich, Tomsk 634021 (RU)
(74) Vertreter: Jeck, Anton
(86) Internationale Anmeldenummer: PCT/RU2012/000237
(87) Internationale Veröffentlichungsnummer: WO 2012/138253

(56) Entgegenhaltungen:
- FR-A1- 2 387 924
- RU-C1- 2 245 864
- SU-A1- 560 859
- SU-A1- 863 551
- SU-A1- 943 214
- SU-A1- 945 142
- UA-C2- 77 552
- US-A1- 2003 003 039

## Beschreibung

Die Erfindung ist in der Feuerfestindustrie und insbesondere bei der Herstellung von feuerfesten hochwiderstandsfähigen elektrisch nicht leitenden Erzeugnissen aus aluminiumphosphatgebundenen Korund- und Siliziumkarbid-Betonen einsetzbar. Durch das Patent RU 2365561 vom 11.12.2007, veröff. 27.08.2009, IPC C04B35/10, ist eine Zusammensetzung für derartige Erzeugnisse bekannt. Die Masse zur Herstellung von feuerfesten Wärmeschutzmaterialien und Erzeugnissen umfasst ein Aluminiumphosphatbindemittel und ein Gemenge in Form von einem Gemisch aus feuerfestem Füllstoff, der aus einer Gruppe von Aluminiumoxiden und Alumosilikaten und einem oder zwei aus einer Gruppe ausgewählten zusammengesetzten Magnesium-, Eisen-, Silizium- und Aluminiumoxiden (Vermiculit - Perlit) mit folgendem Komponentenverhältnis, Mass. %, besteht: Gemenge - 35-85; Phosphatsuspension - 15-65. Als Boralumophosphat- oder Chromalumophosphat-Bindemittel wird ein feuerfester Tonerde- Füllstoff mit einer Korngröße von 0,125-0 mm in einer Menge von 0,1-15 % der Suspensionsmasse mit folgendem Komponentenverhältnis des Gemenges eingesetzt: Bei einem Gemisch von feuerfestem Füllstoff und Perlit betragen die Anteile jeweils 1,0 und 0,04-4,0; bei einem Gemisch von feuerfestem Füllstoff und Vermiculit betragen die Anteile jeweils 1,0 und 0,05-2,5; bei einem Gemisch von feuerfestem Füllstoff und Perlit mit Vermiculit betragen die Anteile 1,0 für den Füllstoff, 3,95 - 0,05 für Perlit, 0,05 - 2,45 für Vermiculit.

Die Nachteile des Stoffes sind:
- Bei einem Aluminiumphosphatbindemittel setzten sich Niedertemperatursubstanzen wie Chrom, Bor immer während des Brennens des Gemisches frei. Das führt zur Verunreinigung der Erzeugnisse und der Auskleidung,
- Tonerdesilikate und Aluminiumoxide gehören zu verschiedenen Gruppen ihrer chemischen Wechselwirkung nach zu den Phosphatbindemitteln und vermindern akut die Eigenschaften des entstehenden kristallinen Aluminiumorthophosphats in Form der Bindung.

Durch das Patent RU 2365562 vom 13.07.2007, veröffentlicht am 27.08.2009, IPC C04B35/66, C04B35/103 ist eine Stoffzusammensetzung bekannt. Die feuerfeste Masse enthält, Mass. %: Graphit 5 - 8; Phosphatweichmacher 5 - 10; feinkörnigen feuerfesten pulverartigen Füllstoff aus der Gruppe Edelkorund weiß, Schamotte mit einer Korngröße von unter 63 µm 4 - 25; organische Fasern 0,05 - 0,15; Abfallprodukte von der Herstellung eines kohlenhaltigen Rohstahlchromeisens 2 - 6 und pulverartige Zuschlagstoff aus der Gruppe: Edelkorund weiß, Siliziumkarbid oder Schamotte mit einer Korngröße von 6 - 0,5 mm und dem Rest.

Die Nachteile der feuerfesten Masse sind wie folgt: Das Vorhandensein von Graphit und organischen Fasern, welche die Porosität der Masse beim nachfolgenden Brennen erhöhen, vermindert wesentlich die Homogenität der Masse aufgrund der unterschiedlichen Dichten im Vergleich zum Füllstoff. Beim Brennen des Stoffes verursachen ihre Verbrennungsabprodukte Verunreinigungen und erhöhen die Wärme- sowie die elektrische Leitfähigkeit.

Die Zusammensetzung des pulverartigen Füllstoffs mit Edelkorund, Siliziumkarbid und Alumosilikaten kann gemäß den erforderlichen Kenndaten hinsichtlich Feuerfestigkeit, Wärmeleitfähigkeit und Festigkeit nicht homogenisiert werden.

Als Prototyp wurde eine Stoffzusammensetzung nach dem Patent RU 2245864 vom 09.07.2003, veröffentlicht am 10.02.2005, IPC C04B35/106, gewählt. Während der Vorbereitung des Gemenges wird die Oberfläche der sphärischen Teilchen des Edelkorund- Füllstoffes mit Oleinsäure oder Stearinsäure in einer Menge von 0,5 - 1,0 % der Gesamtmenge eines Phosphatbindemittels benetzt. Während der Vermengung werden ein Phosphatbindemittel und ein feindisperses gleichzeitig gemahlenes Gemisch mit folgenden Komponenten, Mass. %: Al₂O₃ 47 bis 80, ZrO₂.SiO₂ 20 bis 53 diskontinuierlich eingeführt. Die Komponentenanteile im Gemenge sind wie folgt, (Mass. %):
- Edelkorund- Füllstoff: 50 bis 70
- Feindisperses gleichzeitig gemahlenes Gemisch: 30 bis 50
- Phosphatbindemittel über 100 %: 5 bis 10.

Das Gemenge wird homogenisiert und geformt. Die Halbzeuge werden in der Luft gehärtet, bei einer Temperatur der Zirkonkonzentratzersetzung gebrannt und mit einem isothermen Halten in einem Temperaturbereich von 1100 - 900° C gekühlt. Die körnungsmäßige Zusammensetzung des Edelkorundfüllstoffs liegt innerhalb von 0,1 bis 3 mm. Die Teilchengröße der feindispersen gleichzeitig gemahlenen Mischung beträgt 0,002 bis 0,005 mm. Als Phosphatbindemittel wird Orthophosphorsäure verwendet.

Die Nachteile dieses Stoffes sind:

Das Vorhandensein des orthophosphorsäureneutralen feindispersen Füllstoffs in Form von ZrO₂.SiO₂ vermindert drastisch die Festigkeit.

Die FR 2387924 beschreibt einen feuerfesten Zement auf Grundlage eines flüssigen Aluminiumphosphat-Bindemittels.

Es ist Aufgabe der Erfindungen, einen aluminiumphosphatgebundenen Wärmeschutz- und wärmeleitenden Formbeton mit hohen Festigkeitseigenschaften zu schaffen, welche es ermöglichen, den Beton als Konstruktionsmaterial zum Betrieb bei Hochtemperaturen einzusetzen.

Die gestellte Aufgabe wird durch die Merkmale der Ansprüche 1 oder 2 gelöst.

Dies wird dadurch erreicht, dass der aluminiumphosphatgebundene Wärmeschutzbeton gemäß einer 1. Ausgestaltung der Erfindung aus Phosphatbindemittel und einer Mischung besteht. Als Phosphatbindemittel ist Orthophosphorsäure mit einer Konzentration von 65 bis 75 % eingesetzt. Als Mischung ist ein Gemisch von unterschiedlichen Körnungen von Edelkorund der Marke 25A mit folgendem Komponentenverhältnis nach FEPA 32GB 1971, Mass. % verwendet:
- für Wärmeschutz-Korundbeton ist eine Zusammensetzung, (Mass. %) nach FEPA 32GB 1971, verwendet:
   - Edelkorund der Marke 25A
      - 28 bis 36 Körnung 20
      - 22 bis 24 Körnung 46
      - 15 bis 20 Körnung 80
      - 25 bis 35 Körnung 220
   - Orthophosphorsäure mit einer Konzentration von 70 % in einer Menge von 10 bis 12 über 100 Mass. %.

Edelkorund der Marke 25A - Korngrößenbereich (µm) 630 bis 1600, Grundbereich 1000 bis 1250, FEPA Äquivalent - F20.

Edelkorund der Marke 25A - Korngrößenbereich (µm) 200 bis 500, Grundbereich 315 bis 400, FEPA Äquivalent - F46.

Edelkorund der Marke 25A - Korngrößenbereich (µm) 100 bis 250, Grundbereich 160 bis 200, FEPA Äquivalent - F80, sowie

Edelkorund der Marke 25A - Korngrößenbereich (µm) 28 bis 80, Grundbereich 50 bis 63, FEPA Äquivalent - F220.

Dies wird auch dadurch erreicht, dass der aluminiumphosphatgebundene wärmeleitende Beton gemäß einer 2. Ausgestaltung aus Phosphatbindemittel und einer Mischung besteht. Als Phosphatbindemittel ist Orthophosphorsäure mit einer Konzentration von 65 bis 75 % und als Mischung ein Gemisch von Edelkorund der Marke 25A Körnung 220 und zusätzlich ein Gemisch von Siliziumkarbid der Marke 53C, mit einem folgendem Komponentenverhältnis nach FEPA 32GB 1971, (Mass. %), verwendet:
- für wärmeleitenden Siliziumkarbidbeton der Marke 53C, (Mass. %) nach FEPA 32GB 1971
- Edelkorund der Marke 25A
   - 25 bis 35 Körnung 220
- Siliziumkarbid SiC der Marke 53C
   - 32 bis 36 Körnung 20
   - 18 bis 24 Körnung 46
   - 15 bis 20 Körnung 80
- Orthophosphorsäure mit einer Konzentration von 70 % in einer Menge von 10 bis 12 über 100 Mass. %.

Dabei kann der Anteil des Edelkorund der Marke 25A auch betragen (3. Ausgestaltung).

Edelkorund der Marke 25A - Korngrößenbereich (µm) 28 bis 80, Grundbereich 50 bis 63, FEPA Äquivalent - F220.

Siliziumkarbid der Marke 53C - Korngrößenbereich 1250 bis 1000, FEPA Äquivalent - F20.

Siliziumkarbid der Marke 53C - Korngrößenbereich 500 bis 315, FEPA Äquivalent - F46 sowie

Siliziumkarbid der Marke 53 C - Korngrößenbereich 200 bis 160, FEPA Äquivalent - F80.

Das Verfahren zur Herstellung der aluminiumphosphatgebundenen Betone aller angegebenen Zusammensetzungen ist gleich. Das Gemisch von Füllstoff in den angegebenen Körnungen und die 70%-ge Orthophosphorsäure werden bis zu einem homogenen Zustand vermengt und in Formen gegossen. Das anschließende Niedertemperaturbrennen bildet stabile feuerfeste aluminiumphosphatgebundene Betonerzeugnisse aus. Als Aluminiumphosphatbindemittel wirkt dabei das kristalline Aluminium- Orthophosphat.

In der Tabelle 1 sind Angaben über elektrisch nicht leitende Wärmeschutz- Korundbetone bei Temperatur von +1000° C aufgeführt.

In Tabelle 2 sind Angaben über wärmeleitende elektrisch nicht leitende Betone bei Temperatur von +1000° C enthalten.

Die körnungsmäßige Zusammensetzung des Betonstoffes legt weitgehend seine wärmephysikalischen und Festigkeitseigenschaften fest. Dies hängt mit der Dichte der Kornpackung des Füllstoffgemisches in einem Umfang zusammen. Bei gleicher Feuerfestigkeit der aluminiumphosphatgebundenen Korund-Betone (Tabelle 1) weist der Wärmeschutzbeton mit einer Zusammensetzung 1 eine minimal zulässige Festigkeit, eine mittlere Porosität und eine für Feuerfeststoffe hohe Wärmeleitfähigkeit auf. Vergleichbare Eigenschaften zeigt ein Beton mit einer Zusammensetzung 3 mit einer höheren Porosität. Bei Beton mit einer Zusammensetzung 2 sind die wärmephysikalischen und Festigkeitseigenschaften ihren optimalen Werten nahe, d. h., sie haben eine hohe Feuerfestigkeit, eine maximale Festigkeit und eine minimale Wärmeleitfähigkeit und Porosität.

Eine ähnliche Kenndatenverteilung je nach Zusammensetzung zeigen aluminiumphosphatgebundene Siliziumkarbid- Zusammensetzungen (Tabelle 2). Bei gleicher Feuerfestigkeit weist ein Beton mit einer Zusammensetzung 1 eine geringere Festigkeit und eine kleinere Wärmeleitfähigkeit auf. Beton mit Zusammensetzung 3 zeigt ähnliche Kenndaten. Bei Beton mit einer Zusammensetzung 2 sind wärmephysikalische und Festigkeitseigenschaften ihren optimalen Werten nahe. Es geht also um eine hohe Feuerfestigkeit, eine maximale Festigkeit und Wärmeleitfähigkeit sowie minimale Porositätswerte.

**Tabelle 1. Elektrisch nicht leitende Wärmeschutz- Korundbetone**

| Körnungsmäßige Edelkorund- Zusammensetzung | Zusammensetzung 1 Mass. % | Zusammensetzung 2 Mass. % | Zusammensetzung 3 Mass. % |
|---|---|---|---|
| FEPA 20 | 28 | 32 | 36 |
| FEPA 46 | 22 | 23 | 24 |
| FEPA 80 | 15 | 17 | 20 |
| FEPA 220 | 25 | 30 | 35 |
| Orthophosphorsäure über 100 % | 10 | 11 | 12 |
| Druckfestigkeit *) | 68 MPa | 75 MPa | 70 MPa |
| Porosität, % *) | 14 | 8 | 18 |
| Feuerfestigkeit, °C *) | 1800 | 1800 | 1800 |
| Wärmeleitfähigkeit, W/(m-Grad) *) | 0,43 | 0,24 | 0,43 |
| Elektrische Leitfähigkeit *) | Dielektrikum | Dielektrikum | Dielektrikum |

| | | | |
|---|---|---|---|
| *) - Angaben für Betone bei Temperatur +1000° C. | | | |

**Tabelle 2**

| Wärmeleitfähige elektrisch nicht leitende Betone | | | |
|---|---|---|---|
| Körnungsmäßige Zusammensetzung | Zusammensetzung 1 Mass. % | Zusammensetzung 2 Mass. % | Zusammensetzung 3 Mass. % |
| Siliziumkarbid FEPA 20 | 32 | 34 | 36 |
| Siliziumkarbid FEPA 46 | 18 | 19 | 24 |
| Siliziumkarbid FEPA 80 | 15 | 17 | 20 |
| Edelkorund FEPA 220 | 25 | 30 | 35 |
| Orthophosphorsäure über 100% | 10 | 11 | 12 |
| Druckfestigkeit *) | 64 MPa | 75 MPa | 68 MPa |
| Porosität, % *) | 12 | 8 | 24 |
| Feuerfestigkeit, °C *) | 1100 | 1100 | 1100 |
| Wärmeleitfähigkeit, W/(m-Grad) *) | 21 | 26 | 18 |
| Elektrische Leitfähigkeit *) | Dielektrikum | Dielektrikum | Dielektrikum |

| | | | |
|---|---|---|---|
| *) - Angaben für Betone bei Temperatur +1000° C. | | | |

Die erfindungsgemäßen aluminiumphosphatgebundenen Wärmeschutz- und wärmeleitenden Betone weisen hohe Festigkeitseigenschaften auf, die es ermöglichen, sie als Konstruktionsmaterialien zum Betrieb bei Hochtemperaturen einzusetzen.

## Patentansprüche

1. Aluminiumphosphatgebundener Wärmeschutzbeton, welcher aus als Phosphatbindemittel Orthophosphorsäure mit einer Konzentration von 65 bis 75 % und einer Mischung besteht,
**dadurch gekennzeichnet,**
**dass** als Mischung ein Gemisch von verschiedenen Körnungen von Edelkorund der Marke 25A mit folgendem Komponentenverhältnis nach FEPA 32GB 1971, (Mass. %) verwendet ist:
| | |
|---|---|
| Edelkorund - | 28 bis 36 Körnung 20 |
| Edelkorund - | 22 bis 24 Körnung 46 |
| Edelkorund - | 15 bis 20 Körnung 80 |
| Edelkorund - | 25 bis 35 Körnung 220 |
| Orthophosphorsäure - | 10 bis 12 über 100 % Mass. % |

2. Aluminiumphosphatgebundener wärmeleitfähiger Beton, welcher aus als Phosphatbindemittel Orthophosphorsäure mit einer Konzentration von 65 bis 75 % und einer Mischung besteht,
**dadurch gekennzeichnet,**
**dass** als Mischung ein Gemisch von Edelkorund der Marke 25A mit Körnung 220 und zusätzlich ein Gemisch von Siliziumkarbid der Marke 53C mit folgendem Komponentenverhältnis nach FEPA 32GB 1971, (Mass. %), verwendet ist:
| | |
|---|---|
| Edelkorund - | 25 bis 35 Körnung 220 |
| Siliziumkarbid - | 32 bis 36 Körnung 20 |
| Siliziumkarbid - | 18 bis 24 Körnung 46 |
| Siliziumkarbid - | 15 bis 20 Körnung 80 |
| Orthophosphorsäure - | 10 bis 12 über 100% Mass. % |

## Claims

1. An aluminum phosphate bound heat-insulation concrete, which comprises orthophosphoric acid as a phosphate binder in a concentration of from 65 to 75% and a mixture,
**characterized in that**
as the mixture, a mixture of various grades of special corundum type 25A having the following proportion of components per FEPA 32GB 1971 (mass %) is used:
| | |
|---|---|
| special corundum - | 28 to 36 grade 20 |
| special corundum - | 22 to 24 grade 46 |
| special corundum - | 15 to 20 grade 80 |
| special corundum - | 25 to 35 grade 220 |
| orthophosphoric acid - | 10 to 12 over 100% mass %. |

2. An aluminum phosphate bound heat-conducting concrete, which comprises orthophosphoric acid as a phosphate binder in a concentration of from 65 to 75% and a mixture,
**characterized in that**
as the mixture, a mixture of special corundum type 25A grade 220 and in addition a mixture of silicon carbide type 53C having the following proportion of components per FEPA 32GB 1971 (mass %) is used:
| | |
|---|---|
| special corundum - | 25 to 35 grade 220 |
| silicon carbide - | 32 to 36 grade 20 |
| silicon carbide - | 18 to 24 grade 46 |
| silicon carbide - | 15 to 20 grade 80 |
| orthophosphoric acid - | 10 to 12 over 100% mass %. |

## Revendications

1. Béton thermique lié à du phosphate d'aluminium constitué d'acide orthophosphorique en qualité d'agent liant le phosphate présentant une concentration de 65 à 75% et d'un mélange
Caractérisé de sorte que
Il utilise en tant que mélange une composition de différentes granulations de corindon raffiné de la marque 25A avec la proportion de composants suivante en fonction avec FEPA 32GB 1971, (masse en %) :
| | |
|---|---|
| Corindon raffiné- | 28 à 36 granulation 20 |
| Corindon raffiné- | 22 à 24 granulation 46 |
| Corindon raffiné- | 15 à 20 granulation 80 |
| Corindon raffiné- | 25 à 35 granulation 220 |
| Acide orthophosphorique | 10 à 12 plus de 100% masse % |

2. Béton de conductibilité thermique lié par du phosphate d'aluminium constitué d'acide orthophosphorique en qualité d'agent liant le phosphate présentant une concentration de 65 à 75% et d'un mélange
Caractérisé de sorte que
Il utilise en tant que mélange une composition de corindon raffiné de la marque 25A avec granulation 220 et en complément un mélange de carbone de silicium de la marque 53C avec la proportion de composants suivante en fonction avec FEPA 32GB 1971, (masse en %) :
| | |
|---|---|
| Corindon raffiné- | 25 à 35 granulation 220 |
| Carbone de silicium- | 32 à 36 granulation 20 |
| Carbone de silicium- | 18 à 24 granulation 46 |
| Carbone de silicium- | 15 à 20 granulation 80 |
| Acide orthophosphorique | 10 à 12 plus de 100% masse % |
